# EUROPÄISCHE PATENTSCHRIFT

(11) **EP 0 846 664 B1**
(45) Veröffentlichungstag und Bekanntmachung des Hinweises auf die Patenterteilung: **05.06.2002**
(21) Anmeldenummer: 97117205.1
(22) Anmeldetag: 04.10.1997
(51) Int. Cl.: C02F 3/30, C02F 3/28, C02F 3/04

(54) **Energieoptimierte Kläranlage**
Waste water treatment plant achieving optimum use of the energy
Station d'épuration d'eau usée avec consommation d'énergie optimisée

(30) Priorität: 05.12.1996 DE 19650482
(43) Veröffentlichungstag der Anmeldung: 10.06.1998
(73) Patentinhaber: Risse, Henry, Dipl.-Ing., 52068 Aachen (DE)
(72) Erfinder: Risse, Henry, Dipl.-Ing., 52068 Aachen (DE)
(74) Vertreter: Patentanwälte Hauck, Graalfs, Wehnert, Döring, Siemons

(56) Entgegenhaltungen:
- EP-A- 0 302 545
- WO-A-93/13023
- DE-A- 4 308 156
- US-A- 4 632 758
- US-A- 5 393 427
- PATENT ABSTRACTS OF JAPAN vol. 010, no. 049 (C-330), 26. Februar 1986 & JP 60 193596 A (KUBOTA TEKKO KK), 2. Oktober 1985

## Beschreibung

Die vorliegende Erfindung betrifft eine energieoptimierte Kläranlage.

Ausgehend von der augenblicklichen Praxis der verfahrenstechnischen Gestaltung und Bemessung von Kläranlagen mit Belebtschlammsystemen, bei denen das Subscrat energieintensiv aerob abgebaut wird, erscheint ein energieautarker Betrieb nahezu unerreichbar. Insbesondere ist bei der Erweiterung von Kläranlagen zur Stickstoffelimination eine deutliche Zunahme des spezifischen Energieaufwandes für die Abwasserreinigung bei gleichzeitig sinkendem spezifischen Faulgasanfall zu verzeichnen. Des weiteren bewirkt der Trend zu vielen Nebenaggregaten sowie hin zu Schlammtrocknungs- und Verbrennungsanlagen einen weiteren Anstieg des spezifischen Energieeinsatzes.

Aus der WO 93 13023 A sind ein Verfahren und eine Anlage bekannt, bei denen mit einer Vorklärstufe, einer anaeroben Stufe, einer denitrifizierenden Stufe und einer aeroben Nachreinigungsstufe gearbeitet wird. Die bekannte Anlage hat ferner eine von der aeroben Nachreinigungsstufe zur denitrifizierenden Stufe zurückführende Rezirkulationsleitung für Abwasser, d.h. NO₃. In der anaeroben Stufe wird vorwiegend ein Phosphorabbau bezweckt, wobei dort spezielle, hierfür geeignete Mikroorganismen vorgesehen sind. Bei diesen, für den Phosphorabbau vorgesehenen Mikroorganismen handelt es sich um solche, die lediglich eine ansäuernde Wirkung haben und keinen Abbau der Kohlenstoffverbindungen bewirken, d.h. kein Faulgas erzeugen.

Aus der US-A-5 393 427 ist eine Anlage bekannt, bei der die vorgesehenen anaeroben, anoxischen und aeroben Stufe ein Belebtschlammsystem bilden. Die anaerobe Stufe hat hier nur den Zweck, die partikulären und makromolekularen Stoffe im Abwasser soweit zu hydrolisieren und zu spalten, dass ein möglichst hoher Anteil niedermolekularer organischer Säuren entsteht. Dies dient dann als optimales Substrat für die biologische Phosphatelimination der zweiten anaeroben Stufe, der separaten Rücklaufschlammdenitrifikation und der eigentlichen Denitrifikation. Die anaerobe Stufe dient nicht zur Faulgasgewinnung. Insgesamt betrifft diese Veröffentlichung somit ein Belebtschlammsystem mit Hauptzielsetzung einer biologischen Phosphatelimination.

Aus der EP-A 0 302 545 ist eine Anlage bekannt, bei in einer ersten aeroben Stufe mit einem Schlammbettreaktor und in einer zweiten anaeroben Stufe mit einem Fließbettreaktor gearbeitet wird. Eine Festbettbehandlung wird hierbei nicht vorgschlagen.

Aus der US-A-4 632 758 ist die Beheizung von Abwasser bekannt.

Der vorliegenden Erfindung liegt die Aufgabe zugrunde, eine Kläranlage zu schaffen, die sich durch einen besonders niedrigen Energiebedarf auszeichnet.

Diese Aufgabe wird erfindungsgemäß durch eine Kläranlage mit den Merkmalen von Patentanspruch 1 gelöst.

Durch Kombination der vorstehend aufgeführten Reinigungsstufen gelingt es, den Energieaufwand für die Kläranlage zu minimieren. Die Kläranlage hat neben dem Vorteil eines niedrigen Energieverbrauchs insbesondere die Vorteile einer Biogasproduktion und eines niedrigen Überscheßschlammanteils. Die Kosten, insbesondere Betriebskosten, sind niedrig, und zum Betrieb der Kläranlage ist kein sehr hoch qualifiziertes Personal erforderlich.

Ein wesentlicher Aspekt der erfindungsgemäß ausgebildeten Kläranlage betrifft die verstärkte Nutzung von Anaerobtechniken. Im der Vorklärstufe nachgeschalteten Anaerobfilter findet ein anaerober Teilabbau des nicht zur Denitrifikation benötigten Substrates statt. Dieses muß nicht wie in Belebtschlammsystemen energieintensiv aerob abgebaut werden, sondern liefert sogar nutzbare Energie in Form von Faulgas. Des weiteren erfolgt im Anaerobfilter ein Rückhalt partikulärer organischer Stoffe, was sich sehr günstig auf den Betrieb der nachfolgenden Stufen auswirkt.

In der nachgeschalteten denitrifizierenden Stufe findet ein weiterer Abbau der Kohlenstoffverbindungen statt. Durch Verwendung sessiler Biomasse können im Vergleich zum Belebungsverfahren höhere Biomassekonzentrationen im System gehalten werden, wodurch bei knappem Substratangebot die endogene Atmung des Biofilmes einen größeren Anteil an der Denitrifikationsleistung erbringt.

Der denitrifizierenden Stufe ist eine aerobe Nachreinigungsstufe nachgeschaltet. Diese Stufe kann aufgrund des weitgehenden Abbaues der Kohlenstoffverbindungen in den vorangegangenen Behandlungsstufen relativ klein ausgebildet werden, wobei insbesondere eine niedrige Bauhöhe dieser Stufe erzielt werden kann.

Bei dem anaeroben Festbettreaktor, der vorzugsweise als Anaerobfilter ausgebildet ist, erfolgt kein Sauerstoffeintrag und keine Umwälzung. Auch die denitrifizierende Stufe ist als Festbettreaktor ausgebildet, was auch auf die aerobe Nachreinigungsstufe zutrifft, die als Nitrifikationstropfkörper ausgebildet ist. Die Verfahrensstufe Denitrifikation/Nitrifikation ist daher ebenfalls als Festbettsystem ausgebildet. Im denitrifizierenden Festbettreaktor findet hierbei ein weiterer Abbau der Kohlenstoffverbindungen unter der Veratmung des im Nitrifikationstropfkörper gebildeten Nitrates statt.

Durch den weitgehenden Abbau der Kohlenstoffverbindungen in den vorangegangenen Behandlungsstufen läßt der Nitrifikationstropfkörper eine relativ feinkörnige Füllung aus porösem Material zu, durch die die spezifische Aufwuchsfläche gegenüber konventionellen Tropfkörpern mehr als verdreifacht werden kann. Durch den Vorabbau der Kohlenstoffverbindungen werden sich langsamwüchsige autotrophe Nitrifikanten selbst in den oberen Zentimetern gegen die heterotrophen Bakterien behaupten können, wodurch eine besonders niedrige Bauhöhe des Tropfkörpers möglich wird.

Die vorgesehenen Festbettsysteme zeichnen sich durch sehr geringe Überschußbiomasse-Produktionsraten aus. Diese kann für den Anaerobfilter auf weniger als 1/10 der aeroben abgeschätzt werden. Beim anoxischen Abbau im Denitrifikationsreaktor liegt die Überschußbiomasseproduktion ebenfalls um 20-30 % unter der aeroben. Im Nitrifikationstropfkörper sind extrem niedrige Raumbelastungen (B_{R} = ca. 0,1...0,01kg BSB₅/m³* d) zu erwarten, so daß hier die Überschußbiomasseproduktion deutlich unter der konventioneller Tropfkörper liegt.

Die Vorklärstufe ist vorzugsweise als kombinierter Absetz-Faulbehälter ausgebildet. Hierin werden vorzugsweise die 5 verfahrenstechnischen Vorgänge Vorklärung, Schlammeindickung, Schlammstabilisierung, Faulgaserzeugung und Schlammspeicherung gleichzeitig in einem Bauwerk durchgeführt, ohne daß die beteiligten Massenströme durch energieverbrauchende externe Aggregate bewegt werden müssen. Eine besonders bevorzugte Ausführungsform der Erfindung zeichnet sich dadurch aus, daß die Vorklärstufe als Emscherbrunnen ausgebildet ist.

Die Vorklärstufe ist zweckmäßigerweise wirksam gegen Abkühlung isoliert und hat zweckmäßigerweise eine Heizung an der Bauwerksohle zur partiellen Erwärmung bzw. Vermeidung einer Auskühlung nach unten. Damit kann die mittlere Jahrestemperatur im Schlammraum von üblicherweise 8-11°C auf 15-17°C erhöht werden, wodurch annähernd eine Verdopplung der Aktivität der Methanbildner zu erwarten ist bei gleichzeitiger Verkürzung der notwendigen Faulzeit von bisher 90 Tagen auf etwa 50 Tage.

Es hat sich gezeigt, daß ein erfindungsgemäß ausgebildetes Kläranlagensystem bestehend aus einem wärmetechnisch optimierten, multifunktionalen Emscherbrunnen, einem Anaerobfilter als biologische Vorbehandlungsstufe, einem denitrifizierenden Festbettreaktor und einem Nitrifikationstropfkörper, die in dieser Reihenfolge in Strömungsrichtung des Abwassers angeordnet sind, zu einem Kläranlagenkonzept mit besonders guter Energieoptimierung führt.

Mit diesem Konzept kann der Energiebedarf für die Hauptprozesse der Abwasserreinigung (Belüftung, Abwasserhebung, Feststoffabtrennung, Schlammbehandlung) im Vergleich zu Belebtschlammanlagen des Standes der Technik auf etwa 1/4 reduziert werden. Das System benötigt als wesentliche Energieverbrauchergruppen lediglich eine Zulaufhebestufe und eine Rezirkulationspumpstufe (zwischen Nitrifikationstropfkörper und Denitrifikationsfestbett).

Durch Gewinnung von Faulgas im optimierten Emscherbrunnen sowie im Anaerobfilter ist ein geschätztes thermisches Energieäquivalent von rund 54.700 kWh in der Anlagengrößenklasse 5000E erzeugbar, was elektrisch etwa 16.400 kWh entspricht. Damit können im Jahresmittel mehr als 50% des Restenergiebedarfes gedeckt werden. Weitere Vorteile in bezug auf die Umweltentlastung ergeben sich aus dem geringen Schlammanfall im Vergleich zum Belebungsverfahren, der einfachen Schlammbehandlung sowie der emissionsfreien, geschlossenen Bauweise von Anaerobfilter und Denitrifikationsfestbettreaktor. Nach vorsichtiger Schätzung kann im Vergleich zum schwachbelasteten Belebungsverfahren mit einem um ca. 30% geringeren spezifischen Behandlungsvolumen/E gerechnet werden.

Im einzelnen ist zu der erfindungsgemäß ausgebildeten energieoptimierten Kläranlage noch folgendes auszuführen:

Bei dem als mechanische Vorklärstufe dienenden kombinierten Absetz-Faulbehälter findet im oberen Bereich eine Vorklärung statt, während der Schlamm nach unten absinkt. Es findet ein reiner Sedimentationsvorgang statt. Eine künstlich erzeugte Bewegung der Masse ist nicht erforderlich. Wie vorstehend bereits erwähnt, wirkt sich eine geringfügige Temperaturerhöhung positiv aus.

In der erfindungsgemäß ausgebildeten Kläranlage werden etwa 50-70% der CSB-Fracht anaerob abgebaut. Wie erwähnt, ist der anaerobe Festbettreaktor vorzugsweise als Anaerobfilter ausgebildet, wobei ein körniges Aufwuchsträgermaterial besonders bevorzugt wird. Der Filter wird vorzugsweise vom Abwasser von unten nach oben durchlaufen und arbeitet bei Umgebungstemperatur und üblicher Abwassertemperatur, kann jedoch im kalten Bereich auch isoliert werden.

Die Denitrifikationsstufe ist vorzugsweise als geschlossener Festbettreaktor ausgebildet, der lediglich eine Ausgasöffnung aufweist. Über eine Leitung wird NO₃ von der aeroben Nachreinigungsstufe (Nitrifikationstropfkörper) zum Denitrifikationsreaktor rezirkuliert.

Die Höhe des Nitrifikationstropfkörpers kann sehr stark verringert werden. Dies wird durch die weitgehende Vorreinigung im Anaerobfilter und im Denitrifikationsreaktor möglich. Auf den Tropfkörper gelangt ein weitgehend vom CSB und abfiltrierbaren Stoffen befreites Abwasser, so daß im Tropfkörper nur noch nitrifiziert und der Rest-CSB eliminiert werden muß. Eine Nitrifikation verbunden mit einer Elimination des noch verbleibenden CSB hat wiederum nur eine sehr geringe Überschußschlammproduktion zur Folge, was den Einsatz von feinkörnigerem Material (Korngröße ca. 15mm) im Vergleich zu konventionellen Tropfkörpern (60-80mm) möglich macht. Das feinkörnigere Material weist dann eine nutzbare spezifische Oberfläche über 400m²/m³ auf, so daß die Bauhöhe des Tropfkörpers stark verringert werden kann.

In Weiterbildung der Erfindung sind der Anaerobfilter, die Denitrifikationsstufe und die aerobe Nachreinigungsstufe so angeordnet, daß im Fall einer Spülung der Reaktoren die anfallenden Schlämme im freien Gefälle in den Zulauf gelangen und mit dem Zulaufhebewerk in den kombinierten Absetz-Faulbehälter gefördert werden, dort sedimentieren und zusammen mit dem Primärschlamm ausfaulen können. Die Schlammbehandlung ist somit besonders einfach. Die thermische Optimierung des kombinierten Absetz-Faulbehälters (Emscherbrunnens) durch Isolierung und Heizung nur so weit, daß ein Auskühlen verhindert wird, ermöglicht zum einen eine nennenswerte Gasgewinnung und zum anderen eine Reduzierung des Behandlungsvolumens.

Vorzugsweise ist die Vorklärstufe (Emscherbrunnen) mit einer Einrichtung versehen, mit der Faulgas entnommen werden kann, das für die Gewinnung von Sekundärenergie geeignet ist.

Im Regelfall wird für die Aufrechterhaltung des Reinigungsprozesses bei Zufluß des Rohabwassers im freien Gefälle (d.h. kein Zulaufpumpwerk notwendig) lediglich eine Rezirkulationspumpstufe benötigt, wodurch sich ein minimaler Energieaufwand ergibt.

Bei der erfindungsgemäß ausgebildeten Kläranlage kann der aeroben Nachreinigungsstufe eine Einrichtung zur P-Fällung nachgeordnet sein. Eine derartige Einrichtung kann in herkömmlicher Weise ausgebildet sein. Ferner kann der anaeroben Nachreinigungsstufe eine konventionelle Nachklärstufe, beispielsweise ein Lamellenklärer, nachgeschaltet sein.

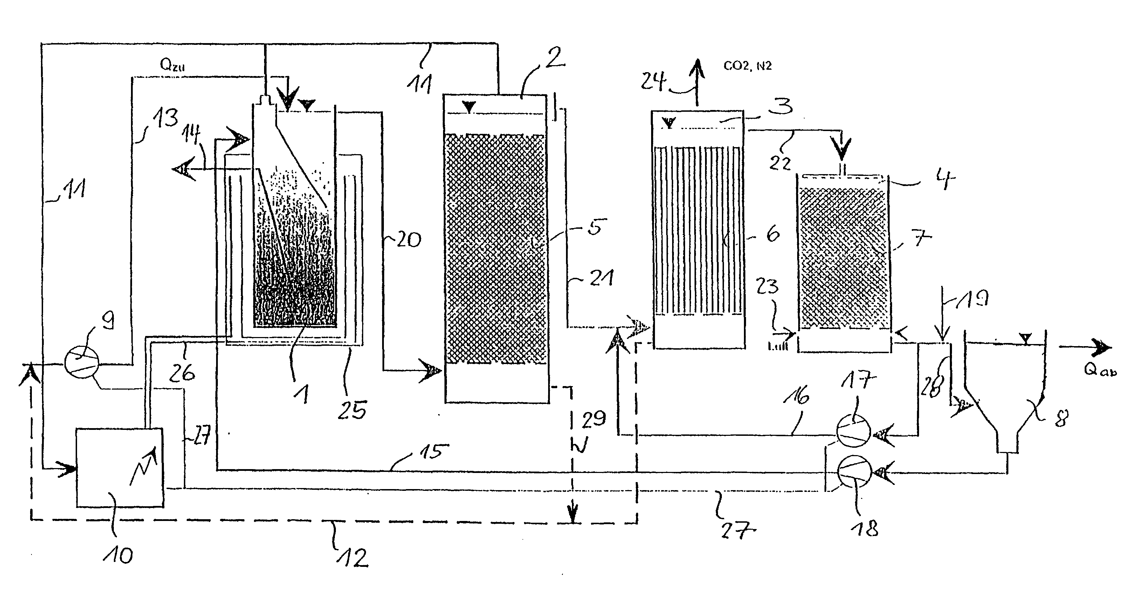

Die Erfindung wird nachfolgend anhand eines Ausführungsbeispieles in Verbindung mit der Zeichnung im einzelnen beschrieben. Die einzige Figur zeigt eine Schemadarstellung einer erfindungsgemäß ausgebildeten energieoptimierten Kläranlage.

Die einzige Figur zeigt die Hauptbestandteile der Kläranlage, nämlich einen Emscherbrunnen 1 mit Gaserfassung, einen Anaerobfilter 2, einen denitrifizierenden Festbettreaktor 3 und einen Nitrifikationstropfkörper 4, die in dieser Reihenfolge in Strömungsrichtung des Abwassers angeordnet sind. Das Abwasser wird über ein Zulaufpumpwerk 9 und eine Zulaufleitung 13 oben in den Emscherbrunnen 1 eingeführt. Im Emscherbrunnen 1 findet eine Kombination aus Vorklärung, Schlammstabilisierung, Eindickung und Methangaserzeugung in einem thermisch optimierten Bauwerk ohne bewegte Aggregate statt. Hierdurch wird die Schlammbehandlung wesentlich vereinfacht, da keine separaten Schlammpumpen zur Förderung von der Vorklärung zum Faulraum, keine Voreindicker, keine maschinellen Überschußschlammeindickvorrichtungen und keine Umwälzpumpen erforderlich sind. Der Emscherbrunnen 1 ist wärmeisoliert und in einem Massenwärmespeicher 25 angeordnet, der über eine Abwärmeleitung 26 von einem Blockheizkraftwerk 10 mit Wärmeenergie versorgt wird. Dieses Blockheizkraftwerk 10 wird durch das von der Anlage abgegebene Faulgas beheizt., wie später erläutert, und gibt elektrische Energie über Leitungen 27 an das vorstehend erwähnte Zulaufpumpwerk 9 sowie weitere Pumpen 17, 18, die später erläutert werden, ab.

Im Emscherbrunnen findet ein Sedimentationsvorgang statt, d. h. die schwereren Substanzen des Abwassers sinken ab, so daß sich im unteren Teil des Emscherbrunnens 1 Faulschlamm ansammelt. Dieser Faulschlamm kann über eine Faulschlammentnahmeeinrichtung 14 periodisch abgeführt werden. Das gereinigte Abwasser gelangt über eine Abwasserleitung 20 in den unteren Bereich eines anaeroben Festbettreaktors (Anaerobfilter) 2. Dieser Anaerobfilter 2 besitzt ein Festbett 5, das vom Abwasser aufwärts durchströmt wird. Im Anaerobfilter 2 findet ein anaerober Teilabbau des nicht zur Denitrifikation benötigten Substrates statt. Hierdurch entstehen Faulgase, die über eine Faulgasabführleitung 11 zum Blockheizkraftwerk 10 abgeführt werden. An diese Faulgasabführleitung 11 ist auch ein vom Emscherbrunnen 1 kommender Zweig angeschlossen.

Das Abwasser, das das Festbett 5 des Anaerobfilters 2 passiert hat, wird von dessen oberem Ende über eine Leitung 21 dem unteren Ende eines denitrifizierenden Festbettreaktors 3 zugeführt. Es durchströmt dabei in Aufwärtsrichtung ein Festbett 6. Im denitrifizierenden Festbettreaktor 3 erfolgt neben einer Denitrifizierung ein weiterer Abbau der Kohlenstoffverbindungen unter Veratmung des im nachfolgenden Nitrifikationstropfkörper 4 gebildeten Nitrates, das über eine Rezirkulationsleitung 16 vom unteren Ende des Nitrifikationstropfkörpers 4 in den denitrifizierenden Festbettreaktor rezirkuliert wird. Die im denitrifizierenden Festbettreaktor gebildeten Gase CO₂ und N₂ werden bei 24 in die Atmosphäre abgegeben.

Das Abwasser gelangt vom oberen Ende des denitrifizierenden Festbettreaktors 3 über eine Leitung 22 zum oberen Ende des Nitrifikationstropfkörpers 4. Es wird gleichmäßig auf das zugehörige Festbett 7 verteilt und über eine Leitung 28 abgeführt. Die Leitung 28 führt über eine herkömmlich ausgebildete Einrichtung 19 zur Fällung von P in einen Lamellenklärer 8 als Nachklärstufe. Das gereinigte Abwasser wird dann in den Vorfluter abgegeben.

Von der Leitung 28 zweigt die vorstehend erwähnte Rezirkulationsleitung 16, in der eine Pumpe 17 angeordnet ist, ab. Wie bei 23 gezeigt, tritt in das Festbett 7 des Tropfkörpers 4 im unteren Bereich Umgebungsluft ein.

Beim Reinigen der Anlage gelangt der in der Nachklärung 8 angesammelte Überschußschlamm über eine mit einer Pumpe 18 versehene Leitung 15 zurück in den Emscherbrunnen 1 und setzt sich dort ab. Bei ausreichendem Gefälle zum Anlagenzulauf kann der Überschußschlamm auch im freien Gefälle transportiert und mit der Pumpe des Zulaufhebewerkes in den Emscherbrunnen gefördert werden. Über eine Leitung 12 wird das Rückspülabwasser vom denitrifizierenden Festbettreaktor 3 in die Abwasserzulaufleitung 13 zurückgeführt. Eine Rückführleitung 29 zur Abwasserzulaufleitung 13 ist ebenfalls vom anaeroben Festbettreaktor vorgesehen.

## Patentansprüche

1. Kläranlage mit in Strömungsrichtung des Abwassers einer Vorklärstufe, einem anaeroben Festbettreaktor (2), in dem ein anaerober Teilabbau des nicht zur Denitrifikation benötigten Substrates stattfindet und der eine Einrichtung zur Faulgasentnahme aufweist, einer als denitrifizierender Festbettreaktor ausgebildeten denitrifizierenden Stufe (3), einer als Nitrifikationstropfkörper (4) ausgebildeten aeroben Nachreinigungsstufe und einer vom Nitrifikationstropfkörper (4) zum denitrifizierenden Festbettreaktor zurückführenden Rezirkulationsleitung (16) für NO3.

2. Kläranlage nach Anspruch 1, **dadurch gekennzeichnet, dass** die Vorklärstufe als kombinierter Absetz- Faulbehälter ausgebildet ist.

3. Kläranlage nach Anspruch 1 oder 2 **dadurch gekennzeichnet, dass** die Vorklärstufe als Emscherbrunnen (1) ausgebildet ist.

4. Kläranlage nach einem der vorangehenden Ansprüche, **dadurch gekennzeichnet, dass** die Vorklärstufe thermisch isoliert ist.

5. Kläranlage nach einem der vorangehenden Ansprüche, **dadurch gekennzeichnet, dass** die Vorklärstufe beheizt ist.

6. Kläranlage nach einem der vorangehenden Ansprüche, **dadurch gekennzeichnet, dass** die Vorklärstufe eine Faulgas- und Faulschlammentnahmeeinrichtung (11,14) aufweist.

7. Kläranlage nach einem der vorangehenden Ansprüche, **dadurch gekennzeichnet, dass** der anaerobe Festbettreaktor (2) als Anaerobfilter ausgebildet ist.

8. Kläranlage nach Anspruch 7, **dadurch gekennzeichnet, dass** das Festbett (5) aufwärts durchströmt wird.

9. Kläranlage nach einem der vorangehenen Ansprüche, **dadurch gekennzeichnet, dass** die Einrichtung zur Faulgasentnahme eine Faulgasabführleitung (11) ist.

10. Kläranlage nach einem der vorangehenden Ansprüche, **dadurch gekennzeichnet, dass** das Festbett (6) des denitrifizierenden Festbettreaktors aufwärts durchströmt wird.

11. Kläranlage nach einem der vorangehenden Ansprüche, **dadurch gekennzeichnet, dass** dem Nitrifikationstropfkörper (4) eine Fälleinrichtung (19) für P nachgeschaltet ist.

12. Kläranlage nach einem der vorangehenden Ansprüche, **dadurch gekennzeichnet, dass** dem Nitrifikationstropfkörper (4) eine Nachklärstufe nachgeschaltet ist.

13. Kläranlage nach Anspruch 12, **dadurch gekennzeichnet, dass** zwischen der Nachklärstufe und der Vorklärstufe eine Überschussschlammrückführleitung (15) angeordnet ist.

14. Kläranlage nach einem der vorangehenden Ansprüche, **dadurch gekennzeichnet, dass** von der Vorklärstufe und vom Anaerobfilter (2) eine Faulgasleitung (11) zu einer Gasverwertung führt.

## Claims

1. A waste water treatment plant comprising, in flow direction of the waste water, a pre-treatment stage, an anaerobic fixed-bed reactor (2) in which an anaerobic part-decomposition of the substrate not required for the denitrification takes place and which has a fermentation gas discharge means, a denitrifying stage (3) formed as denitrifying fixed-bed reactor, an aerobic post-purification stage formed as nitrification dripper (4) and a recirculation line (16) for NO₃ leading back from said nitrifrication dripper (4) to said denitrifying fixed-bed reactor.

2. The waste water treatment plant according to claim 1, **characterized in that** said pre-treatment stage is formed as combined settling-fermentation tank.

3. The waste water treatment plant according to claim 1 or 2, **characterized in that** said pre-treatment stage is formed as Emscher tank (1).

4. The waste water treatment plant according to one of the preceding claims, **characterized in that** said pre-treatment stage is thermally isolated.

5. The waste water treatment plant according to one of the preceding claims, **characterized in that** said pre-treatment stage is heated.

6. The waste water treatment plant according to one of the preceding claims, **characterized in that** said pre-treatment stage includes a fermentation gas and fermentation sludge discharge means (11, 14).

7. The waste water treatment plant according to one of the preceding claims, **characterized in that** said anaerobic fixed-bed reactor (2) is formed as anaerobic filter.

8. The waste water treatment plant according to claim 7, **characterized in that** the fixed-bed (59 is flown through upwardly.

9. The waste water treatment plant according to one of the preceding claims, **characterized in that** said means for fermentation gas discharge is a fermentation gas discharge line (11).

10. The waste water treatment plant according to one of the preceding claims, **characterized in that** said fixed-bed (6) of said denitrifying fixed-bed reactor is flown through upwardly.

11. The waste water treatment plant according to one of the preceding claims, **characterized in that** said nitrification dripper (4) is followed by a precipitation means (19) for P.

12. The waste water treatment plant according to one of the preceding claims, **characterized in that** said nitrification dripper (4) is followed by a post-treatment stage.

13. The waste water treatment plant according to claim 12, **characterized in that** an excess sludge return line (15) is located between said post-treatment stage and said pre-treatment stage.

14. The waste water treatment plant according to one of the preceding claims, **characterized in that** a fermentation gas line (11) leads from said pre-treatment stage and from said anaerobic filter (2) to a gas utilization plant.

## Revendications

1. Station d'épuration comprenant une étape de décantation préalable dans le sens du courant des eaux usées, un réacteur anaérobie (2) à lit fixe dans lequel a lieu une décomposition anaérobie partielle du substrat non nécessaire pour la dénitrification et qui présente un dispositif pour le soutirage du gaz de digestion, une étape de dénitrification (3) conformée comme un réacteur de dénitrification à lit fixe, une étape d'épuration aérobie ultérieure conformée comme un lit percolateur de nitrification (4) et un conduit (16) de recirculation repartant du lit percolateur de nitrification (4) vers le réacteur de dénitrification à lit fixe.

2. Station d'épuration selon la revendication 1, **caractérisée en ce que** l'étape de décantation préalable est conformée comme un conteneur combiné de décomposition et de décantation.

3. Station d'épuration selon la revendication 1 ou 2, **caractérisée en ce que** l'étape de décantation préalable est conformée comme réservoir de digestion d'Imhoff (1).

4. Station d'épuration selon une des revendications précédentes, **caractérisée en ce que** l'étape de décantation préalable est isolée thermiquement.

5. Station d'épuration selon une des revendications précédentes, **caractérisée en ce que** l'étape de décantation préalable est chauffée.

6. Station d'épuration selon une des revendications précédentes, **caractérisée en ce que** l'étape de décantation préalable présente un dispositif de soutirage (11, 14) du gaz de digestion et des boues digérées.

7. Station d'épuration selon une des revendications précédentes, **caractérisée en ce que** le réacteur anaérobie (2) à lit fixe est conformé comme un filtre anaérobie.

8. Station d'épuration selon la revendication 7, **caractérisée en ce que** le lit fixe (5) est traversé vers le haut.

9. Station d'épuration selon une des revendications précédentes, **caractérisée en ce que** le dispositif de soutirage du gaz de digestion est un conduit d'évacuation (11) du gaz de digestion.

10. Station d'épuration selon une des revendications précédentes, **caractérisée en ce que** le lit fixe (6) du réacteur de dénitrification à lit fixe est traversé vers le haut.

11. Station d'épuration selon une des revendications précédentes, **caractérisée en ce qu'**un dispositif de précipitation (19) pour P est placé après le lit percolateur de nitrification (4).

12. Station d'épuration selon une des revendications précédentes, **caractérisée en ce qu'**une étape de décantation ultérieure est placée après le lit percolateur de nitrification (4).

13. Station d'épuration selon la revendication 12, **caractérisée en ce que** un conduit de retour (15) des boues excédentaires est disposé entre l'étape de décantation ultérieure et l'étape de décantation préalable.

14. Station d'épuration selon une des revendications précédentes, **caractérisée en ce qu'**un conduit de gaz de digestion (11) va de l'étape de décantation préalable et du filtre anaérobie (2) à un dispositif de récupération de gaz.
